# EUROPEAN PATENT SPECIFICATION

(11) **EP 1 089 630 B1**
(45) Date of publication and mention of the grant of the patent: **25.06.2008**
(21) Application number: 99931755.5
(22) Date of filing: 04.06.1999
(51) Int. Cl.: A22C 7/00

(54) **IMPROVED FOOD PATTY MOLDING MACHINE**
MASCHINE ZUR HERSTELLUNG VON NAHRUNGSMITTELPRODUKTEN
MACHINE AMELIOREE A MOULER LES GALETTES

(30) Priority: 05.06.1998 US 88243 P; 05.06.1998 US 88303 P
(43) Date of publication of application: 11.04.2001
(73) Proprietor: Formax, Inc., Mokena, Illinois 60448-0330 (US)
(72) Inventor: LINDEE, Scott A., Mokena, IL 60448 (US); SANDBERG, Glenn, Mokena, IL 60448 (US)
(74) Representative: Hitchcock, Esmond Antony
(86) International application number: PCT/US1999/012501
(87) International publication number: WO 1999/062344

(56) References cited:
- DE-A- 19 506 683
- US-A- 3 053 529
- US-A- 3 946 117
- US-A- 3 952 478
- US-A- 4 054 967
- US-A- 4 081 564
- US-A- 4 182 003
- US-A- 4 329 828
- US-A- 4 541 143
- US-A- 4 608 731
- US-A- 4 949 983
- US-A- 5 730 650

## Description

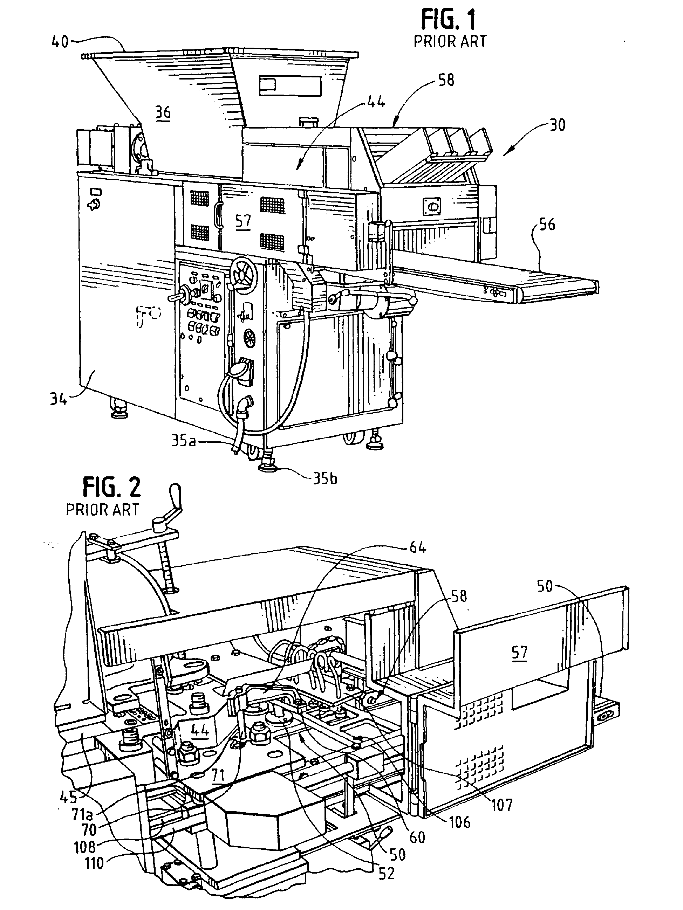

The present invention is directed to a food patty moulding machine and in particular to improvements to the operating structure of a known food patty moulding machine such as described in Figures 1 through 8B.

A FORMAX-12 brand food patty moulding or forming machine 30 manufactured by Formax, Inc, of Mokena, Illinois, USA is shown in Figures 1-8B. The operation of the machine is generally described in US Patents 4,182,003; 4,054,967; and 3,952,478, to which reference is directed.

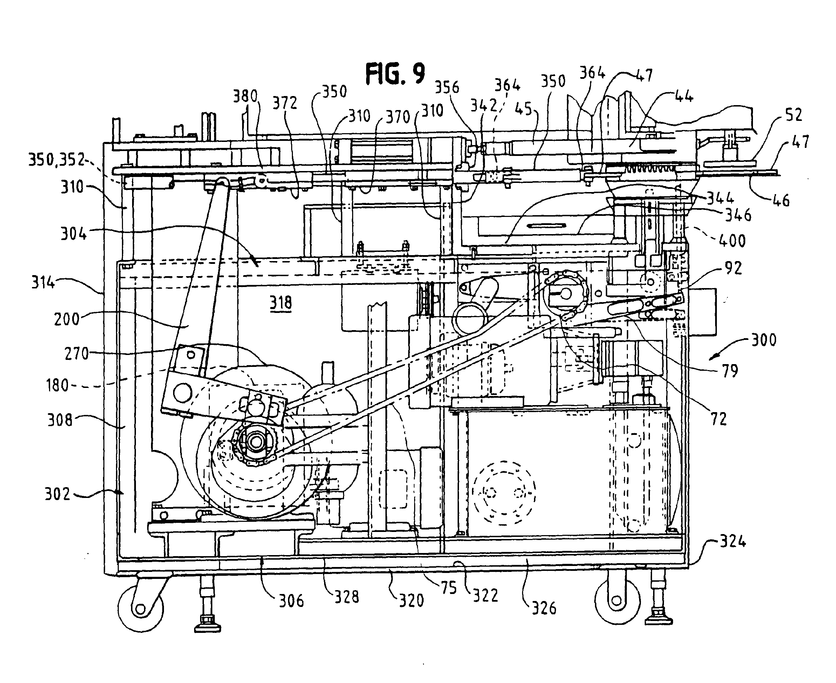

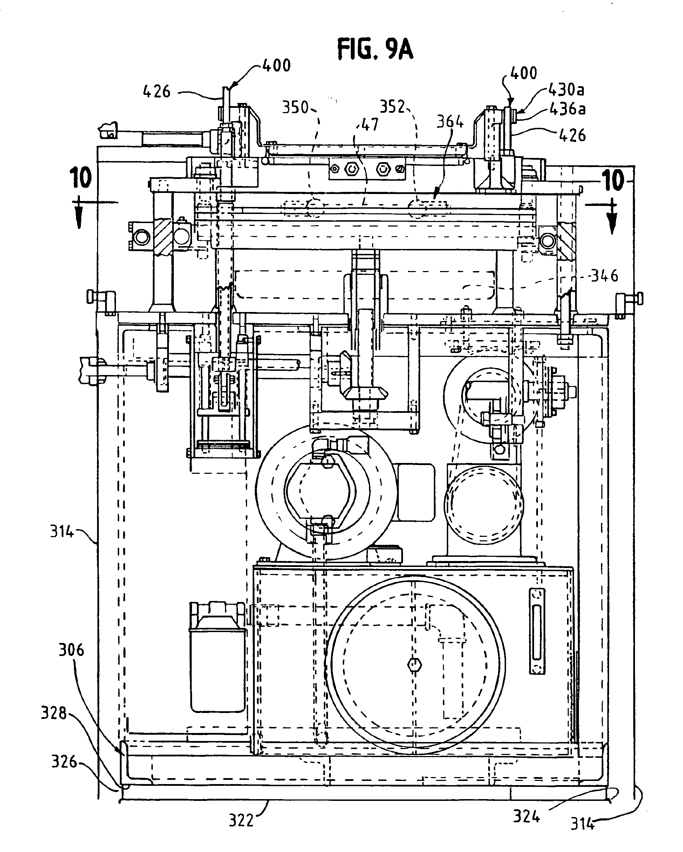

This machine includes a sheet metal housing 34 which encloses the mechanical equipment of the machine. The housing is supported on wheels 35a and/or levelling legs 35b. A hopper 36 is situated at an elevated position on the machine. The hopper includes an open top 40 for receiving bulk food products, for example, whole muscle chicken or ground beef. A pair of feed screws within the hopper (not shown) drives the food product into a pump box area 44
where a reciprocating pump 45 (FIGURE 2) presses the food product into mold cavities 46 (shown in FIGURE 9) of a reciprocating mold plate 47. The mold plate is reciprocated out of the pump box area to a knock-out area 50 where knock-out cups 52 push the formed meat product or patties out of the cavities and onto a conveyer 56 (FIGURE 2). A paper placing station 58 includes mechanisms to interleave paper between patties during the dropping of the patties onto the conveyor.

FIGURE 2 illustrates the machine of FIGURE 1 with an access door 57 open. The knock-out cups 52 are held on a horizontal bar 60 which is supported by two spaced apart knock-out bar arms 64. The knock-out bar arms 64 are clamped to two vertical, reciprocating knock-out rods 70. The rods 70 are journaled or supported at positions 71a on a mold cover 71 below the knock-out bar arms 64. Because the rods 70 can have a substantial unsupported or unguided length above the position 71 a, high bending stress can be realized in the rod 70.

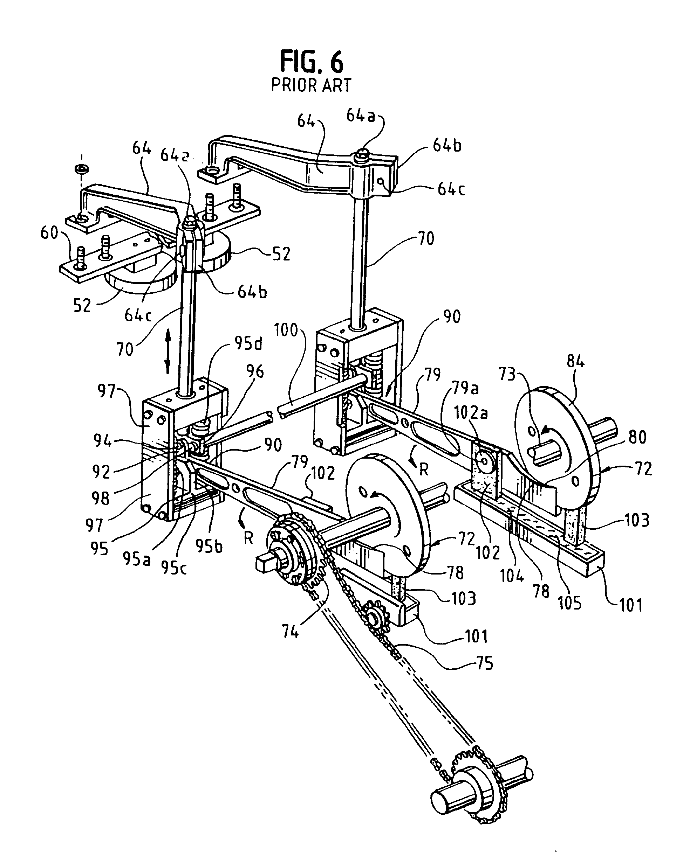

As shown more clearly in FIGURE 6, the rods 70 are driven by the rotation of cams 72 which are mounted on a cam shaft 73 rotationally mounted to the machine frame. The cam shaft 73 is driven to rotate by a sprocket 74. The sprocket is driven by a drive chain 75, which is driven by the power train of the machine.

The cams 72 have cut-out, flat regions 78. Knock-out arms 79 are pivotally connected to the machine frame at a bolt or axle connection or pivot connection 79a and have arcuate ends 80 which slide along the rotating cam surface 84. When the ends 80 reach the cut out, flat regions 78 of the cams, the knock-out arms 79 rotate downwardly in the direction R, and then rotate upwardly in a reverse direction when the flat regions 78 have passed. Thus, rotation of the cams 84 causes an up and down pivoting of the knock-out arms 79 about the connection 79a. An opposite end 90 of each of the knock-out arms is connected to one knock-out rod 70 by a bolted linkage 92 and by a bolt 94. Extending outwardly from each rod 70 is a flag or lug 96 having a hole for receiving a machine screw 98 which is threaded into one of two opposite ends of a spacer rod or tie rod 100. The flag 96 is possibly subjected to high bending or twisting forces during operation and can possibly be subject to cracking due to fatigue.

An oil pan 101 is located beneath each cam 72. One will be described, the respective other is mirror image identical. A front wick 102 made of a woven, sponge or other wick material, is located at the connection 79a, held in place by a washer 102a to continuously oil the pivoting connection 79a. A rear wick 103 is held against the cam surface 84 to continuously oil the interface between the region 78 and the end 80 of the knock-out arm 79. The pan has an open top 104 through which the wicks 102, 103 are dipped. The pan 101 holds a supply of oil 105. It can possibly be a maintenance problem that sprayed wash water inadvertently enters the open top 104 of the pan 101 and contaminates or otherwise washes out the oil.

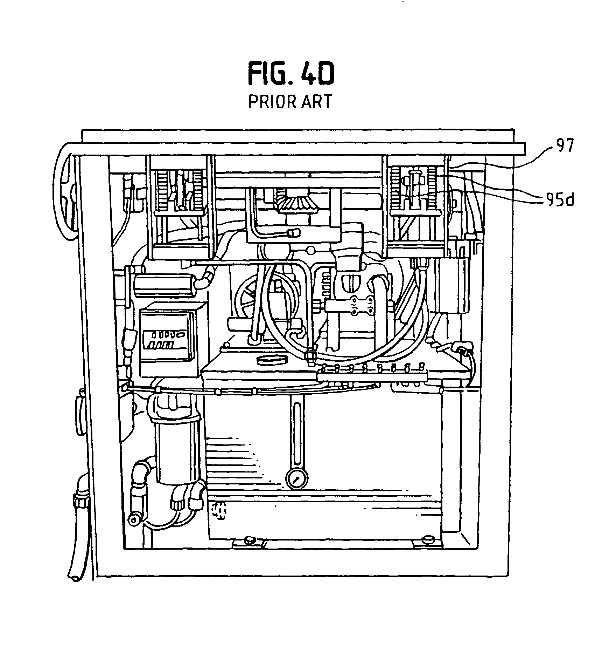

Each bolted linkage 92 is also connected by a bolt 95a to a vertical leg 95b of a moveable plate 95. The plate is held within a guide frame 97 which is mounted by machine screws to a stationary part of the machine frame, at a top of the frame 97. Two springs 95d are mounted between an upper wall of the frame and a bottom leg 95c of the plate and resist the upward lifting of the plate within the frame. The springs are therefore the driving downward force generator of the knock-out operation. In FIGURE 4D the springs are shown compressed with the knock-out rod lifted by the associated cam 72. In FIGURE 6, the springs are expanded, and the knock-out rods have been driven to their downward position.

The knock-out bar arms 64 are mounted to top ends of the rods 70. The bar arms 64 are each fixed vertically to a rod by a top fastener 64a, and rotationally by a clamp arrangement 64b closed by a horizontal fastener 64c. The bar arms 64 are fastened by bolts or machine screws to the horizontal bar 60 which holds the knock-out cups 52. Depending on the product being formed, the bar 60 and cups 52 can have a different shape, and/or the bar can carry a different number of cups.

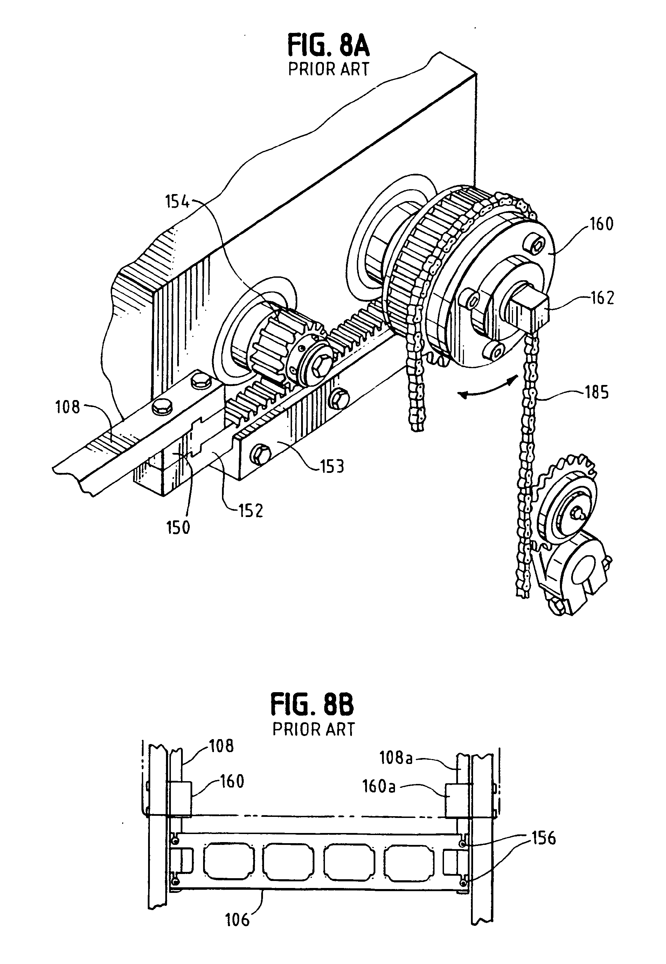

Also shown in FIGURE 2 is a vacuum bar assembly 106 which reciprocates during operation of the machine as part of a vacuum transfer shuttle or vacuum bar assembly for interleaving flexible paper sheets with formed patties as described in U.S. Patent 3,952,478; 4,182,003; or 4,054,967. Also included is a paper placer assembly 107 which places the flexible paper sheets onto the vacuum bar assembly. Both the vacuum bar assembly and the paper placer assembly are driven by reciprocal motion of rods, i.e., by vacuum bar rods 108, 108a (see FIGURE 8B) having a square cross section, and by a paper placer drive rod 110 having a round cross section, respectively.

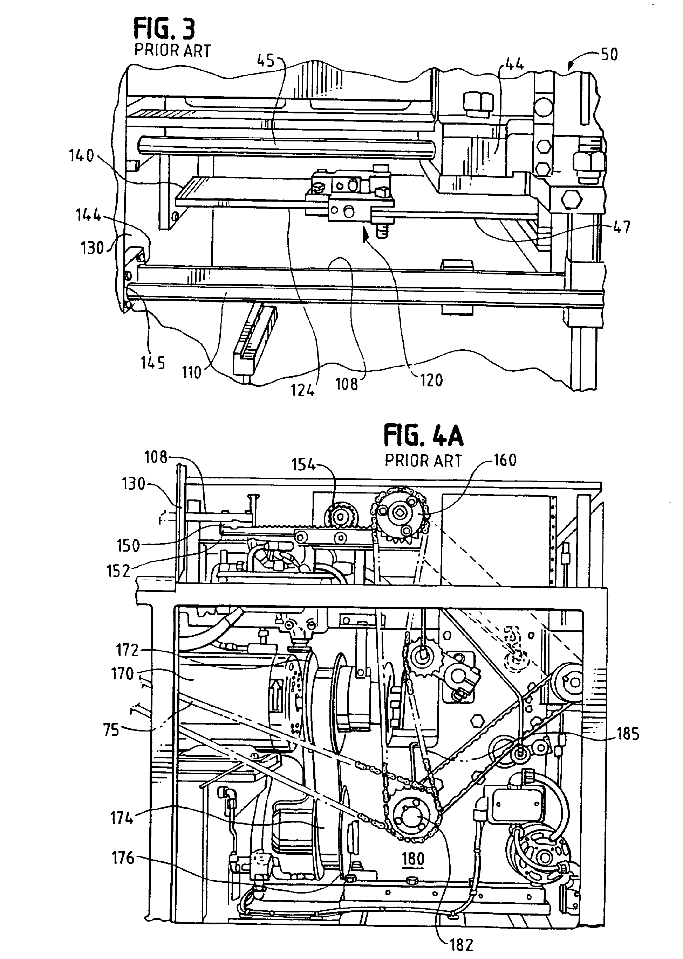

FIGURE 3 illustrates the reciprocating mold plate 47 connected via a hinge assembly 120 to a drive plate or slide plate 124. The drive plate 124 has an elongated rectangular cross section. The drive plate 124, the vacuum bar drive rod 108 and the paper placer drive rod 110 must all penetrate through, and reciprocate through the penetration of, a front wall or skin 130 which separates the food forming front section of the machine from the mechanical compartment. For sanitary reasons, at each penetration a sealing element is provided. The drive plate 124 requires a rectangular sealing element 140 bolted to the skin 130. A similar rectangular seal 144 must be provided at the vacuum rod drive bar 108 as it penetrates the skin 130. Rectangular seals, because of sharp corners are more prone to leakage, and are more expensive than standard circular shaft or rod seals. A circular seal 145 can be used at the paper placer drive rod 110 where it penetrates the skin 130.

FIGURE 4A shows the vacuum bar drive rod or shuttle arm 108 penetrating the skin or wall 130. The rod 108 is connected via an intermediate plate 150 to a rack 152. The rack 152 is driven to reciprocate by a pinion 154.

FIGURES 8A and 8B show the arrangement of the vacuum bar drive rod 108 in more detail. The rack 152 is slidably held in a channel 153. It is to be noted that there are two drive rods 108, 108a arranged on a right side and a left side of the machine respectively. Each of the rods 108, 108a is connected to a rack and driven by a pinion 154 as shown in FIGURE 8A. Each of the rods 108, 108a is connected to one lateral side of the vacuum bar 106 by two machine screws or bolts 156. The rods 108 pass through bearing blocks 160, 160a respectively before being connected to the vacuum bar 106. A paper placer drive sprocket 160 rotates a paper placer drive shaft 162 which rotates a paper placer crank arm 163 (shown in FIGURE 4C) which drives the paper placer drive rod (via linkages) to reciprocate. The crank arm rotates about a horizontal axis of the drive shaft.

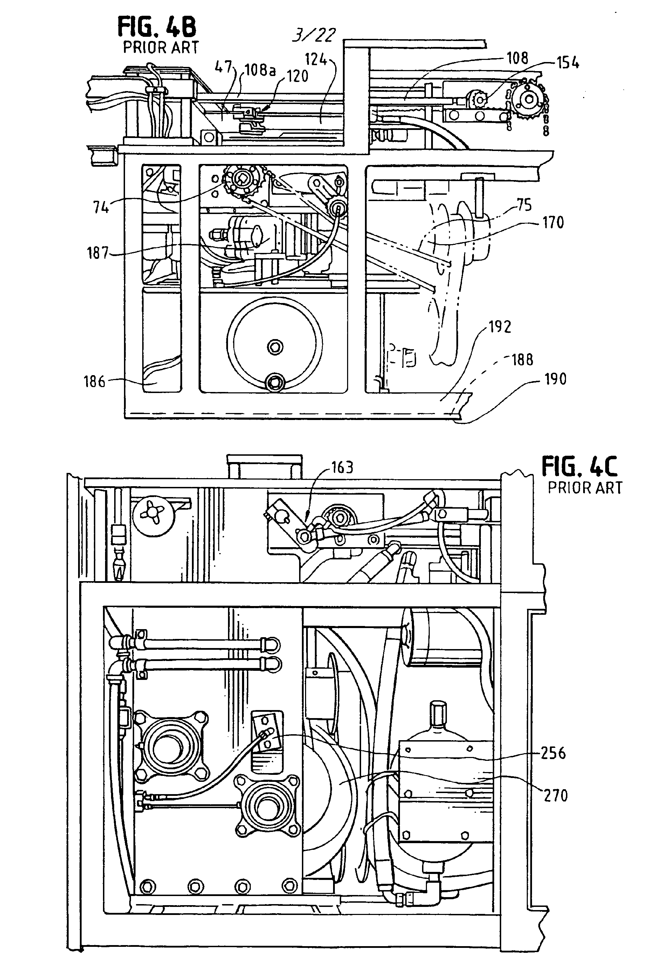

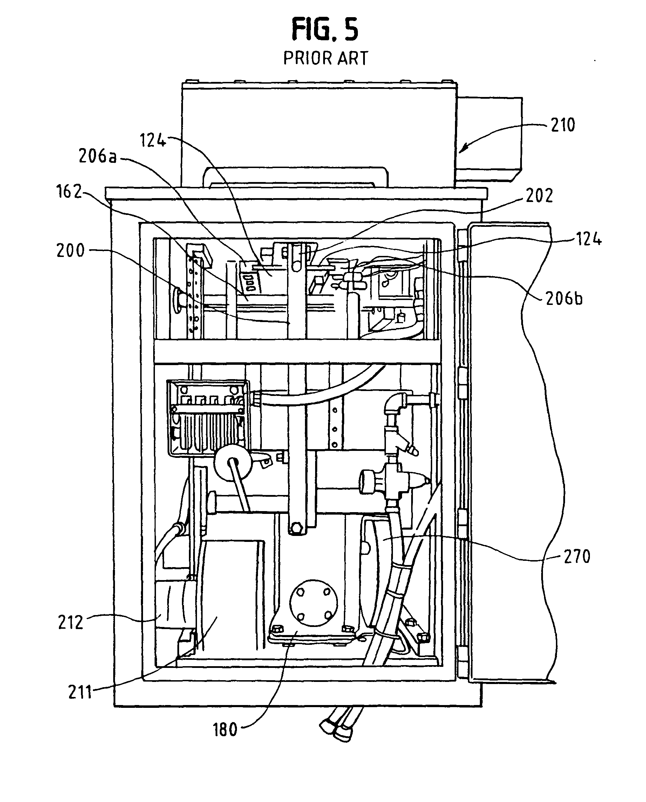

Returning to FIGURES 4A and 4B, the main drive motor 170 is shown, arranged for driving a drive motor pulley 172 which drives a drive belt 174. The drive belt 174 drives a reducer pulley 176 which inputs rotational power to a mold plate drive reducer 180 (see FIGURE 5). A reducer output shaft 182 outputs rotational power from the reducer 180. Sprockets and pulleys which are fixed to the output shaft 182 drive various systems including the drive chain 75 for actuating the knock-out rods 70, and a drive chain 185 for the paper placer sprocket 160. A hydraulic oil tank 186 is located at a front bottom portion of the machine. A rear output shaft of the main drive motor 170 drives a hydraulic pump 187 which powers the hydraulic systems of the machine. Also shown in FIGURE 4B is a bottom skin or floor 188 which is located at an elevation equal to a bottom 190 of a bottom horizontal frame member 192. The bottom skin 188 substantially covers a bottom of the machine.

FIGURE 5 illustrates that the drive system for the mold plate includes a long rocker arm 200 which is connected by a slide plate linkage 202 to the slide plate or drive plate 124. Laterally arranged slide bearings 206a, 206b receive lateral edges of the slide plate 124 and guide the reciprocating movement of the slide plate 124 therein. The lateral bearings 206a, 206b are fixed to the machine overhead structure. Also shown is a feed screw gear box 210 for driving the feed screws within the hopper 40. A cabinet blower 211 driven by a motor 212 is used to circulate cooling air or purge air through the housing 34.

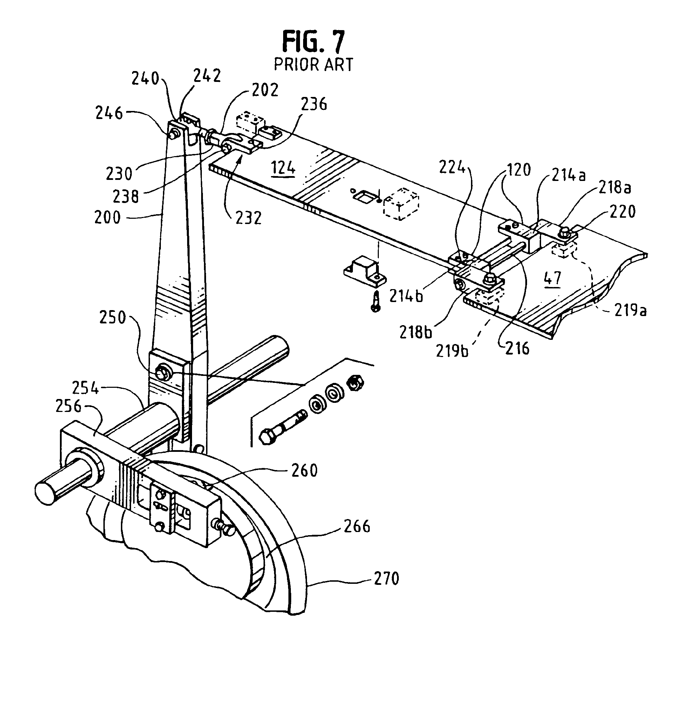

FIGURE 7 shows the drive for the molding plate 47 in more detail. The hinge assembly 120 includes fixed hinge plates 214a, 214b holding a hinge axle 216 upon which are mounted hinged grippers 218a, 218b. The axle 216 allows a degree of pivoting between the fixed hinge plates 214a, 214b and the grippers 218a, 218b respectively. The hinged grippers 218a, 218b include bottom jaws 219a, 219b which are fixed to the upper jaws by machine screws 220, but when the bottom jaws 219a, 219b are released by unscrewing of the machine screws 220, they can pivot downwardly about the axle 216 to allow downward removal of the mold plate 47. The mold plate 47 is provided with holes for allowing passage of the machine screws 220. The hinge plates 214a, 214b are fixed to the slide plate 124 by machine screws 224 which pass through the slide plate 124 and are received into threaded holes in an underlying part of the hinge plates 214a, 214b respectively.

The slide plate linkage 202 includes an adjustable female rod end 230 connected to a clevis 232 which is fixed to the slide plate 124 via a machine screw 236 which is threaded into an underlying part of the U-shaped clevis. The slide plate 124 includes a hole for receiving the machine screw 236. A bolt 238 connects the clevis 232 with an eye-bolt of the female rod end 230. This allows pivoting about the horizontal between the clevis 232 and the female rod end 230. A male rod end 240 is threaded into the female rod end 230 and includes an eye-bolt end 242 for receiving a bolt 246 to allow relative pivoting about the horizontal axis between the male rod end 240 and the long rocker arm 200. A short rocker arm 256 is fixed to the long rocker arm 200 by a shear pin 250 via a shaft 254. The short rocker arm 256 includes an adjustable follower 260 which rides in a shaped cam channel 266 formed in the mold plate drive cam 270. The mould plate drive cam 270 is driven in rotation by the mould plate drive reducer 180 (shown in Figure 5). The interaction between the short rocker arm, the cam 270 and the long rocker arm causes back and forth reciprocation of the slide plate 124, and thus the mould plate 47.

The present inventors have recognised that it would be advantageous to provide an improved patty forming machine, which reduces or eliminates the need for rectangular seals at the front wall of the mechanical compartment. The inventors have also recognised that it would be advantageous to provide a patty forming machine having a bottom skin which can be more freely and reliably cleaned and drained. The inventors have further recognised the potential benefits of a patty forming machine which reduces bending or twisting forces on the knock-out rods and which prevents to a great extent the contamination or washout of oil from reservoirs which serve for the lubrication of the knock-out cams and knock-out arm pivot connections to the machine frame.

The present invention is directed at a patty forming machine, comprising a compartment with a front wall and enclosing a reciprocating device; a mould plate arranged to reciprocate outside the compartment by force from the reciprocating device, and having at least one cavity for receiving food product to form a patty; and two drive rods of round cross-section arranged in parallel and operatively connected to the mould plate. Such a machine is similar to the FORMAX-12 machine described above, and to that disclosed in US Patent No: 5,730,650. According to the present invention, a slide plate is located within the compartment, which slide plate is operatively connected between the reciprocating device and the drive rods, and remains within the compartment throughout the reciprocating travel of the slide plate; and wherein two seals are mounted in the front wall, surrounding two respective openings, each drive rod penetrating one of the seals.

The drive rod of circular cross-section is more easily, reliably and economically sealed at its penetration at a wall which separates the mechanical compartment from the patty forming compartment relative to the drive plate of the prior art machine described in Figures 1-8B. In preferred embodiments the compartment is carried on a frame structure having a bottom horizontal frame supporting the reciprocating device, and a bottom skin underlying the frame structure; the bottom skin being spaced a distance below the bottom horizontal frame to form a vertical gap to allow spray cleaning of a top surface of the bottom skin. The bottom floor or bottom "skin" is typically spaced one inch (2054cm) from the bottom-most horizontal frame for better drainage and cleaning visual inspection.

The invention will now be further described by way of example and with reference to the accompanying drawings wherein:
FIGURE 1 is a perspective view of a prior art patty forming machine;
FIGURE 2 is a fragmentary, enlarged perspective view of a portion of the machine shown in FIGURE 1, with an access door opened to allow viewing inside the cabinetry;
FIGURE 3 is a fragmentary perspective view of a portion of the machine of FIGURE 1 with cabinetry opened or removed to allow viewing of mechanical components;
FIGURE 4A is a fragmentary left side, rear elevational view of the machine shown in FIGURE 1 with cabinetry removed to view the inside mechanical components;
FIGURE 4B is a fragmentary left side, front elevational view of the machine of FIGURE 1 with cabinetry removed to view the internal mechanical components;
FIGURE 4C is a fragmentary right side, rear elevational view of the machine of FIGURE 1 with cabinetry either removed or opened to view the inside mechanical components;
FIGURE 4D is a fragmentary front end view of the machine of FIGURE 1 with cabinetry removed to view inside mechanical components;
FIGURE 5 is a fragmentary rear view of the machine of FIGURE 1 with a rear door opened to view inside mechanical components;
FIGURE 6 is a partially exploded, fragmentary, enlarged perspective view of a patty knock-out system of the machine shown in FIGURE 1, isolated from surrounding components for clarity;
FIGURE 7 is an enlarged, fragmentary, partially exploded, perspective view of a mold plate driving system from the machine shown in FIGURE 1 viewed in isolation from surrounding components for clarity;
FIGURE 8A is an enlarged, fragmentary, perspective view of a vacuum bar shuttle system from the machine in FIGURE 1, shown in isolation from surrounding components for clarity;
FIGURE 8B is an enlarged fragmentary plan view of a vacuum bar connected to left and right vacuum bar shuttle arms, taken from the machine of FIGURE 1, shown in isolation from surrounding components for clarity;
FIGURE 9 is a fragmentary right side elevational view of a patty forming machine of the present invention;
FIGURE 9A is a fragmentary front end view of the patty forming machine shown in FIGURE 9;
FIGURE 10 is a fragmentary sectional view taken generally along line 10-10 from FIGURE 9A;
FIGURE 11 is an enlarged fragmentary plan view taken from FIGURE 10;
FIGURE 12 is a fragmentary enlarged view taken from FIGURE 10;
FIGURE 13 is a sectional view taken generally along line 13-13 from FIGURE 12;
FIGURE 14A is a sectional view taken generally along line 14A-14A from FIGURE 11;
FIGURE 14B is a sectional view taken generally along line 14B-14B from FIGURE 11;
FIGURE 15A is a plan view of a shuttle drive bar taken from FIGURE 10;
FIGURE 15B is an elevational view of the shuttle drive bar of FIGURE 15A;
FIGURE 16 is a fragmentary, enlarged perspective view of a connection detail between mold plate drive rods and a mold plate taken from FIGURE 9;
FIGURE 17 is a rear fragmentary perspective view of the patty forming machine of FIGURE 9;
FIGURE 18 is an enlarged fragmentary elevational view taken from FIGURE 9;
FIGURE 19 is an enlarged fragmentary end view taken from FIGURE 9A;
FIGURE 20 is a left side view of an oil pan shown in FIGURE 9;
FIGURE 21 is a top plane view of the oil pan shown in FIGURE 20;
FIGURE 22 is an end view of the oil pan shown in FIGURE 20;
FIGURE 23 is a side view of a knock-out rod shown in FIGURE 9;
FIGURE 24 is an end view of the knock-out rod shown in FIGURE 23;
FIGURE 25 is a plane view of a knock-out rod spacer assembly shown in FIGURE 9;
FIGURE 26 is a left end view of the assembly shown in FIGURE 25; and

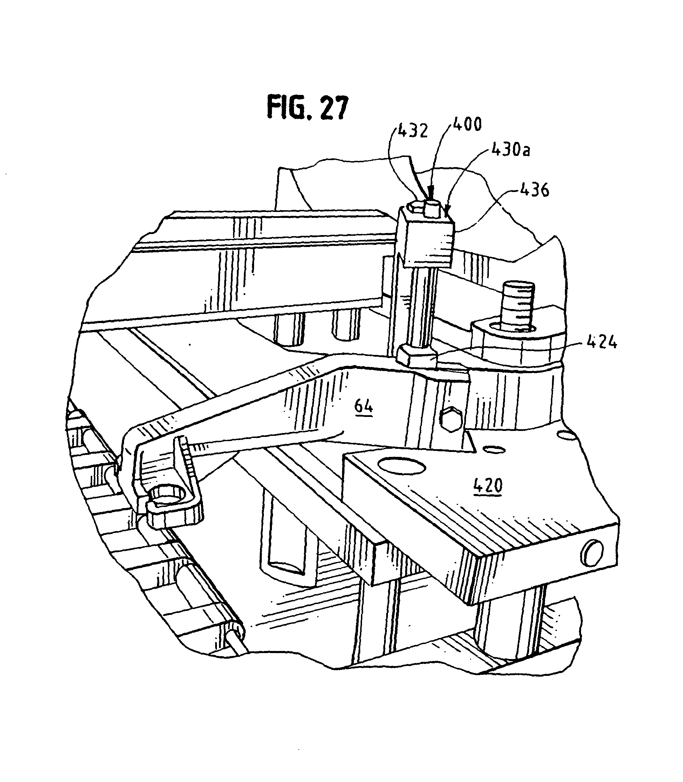

FIGURE 27 is a perspective view of the knock-out bar arm and supporting assembly shown in FIGURE 9.

While this invention is susceptible of embodiment in many different forms, there are shown in the drawings and will be described herein in detail specific embodiments thereof with the understanding that the present disclosure is to be considered as an exemplification of the principles of the invention and is not intended to limit the invention to the specific embodiments illustrated.

FIGURE 9 illustrates a patty forming machine 300 arranged and configured substantially similarly to the machine shown in FIGURES 1-8B except as described below. The machine is structurally supported on and within a rectangular space frame 302 having an upper rectangular frame 304 and a lower rectangular frame 306 supported by columns 308 at each corner and intermittently along sides of the frame 302. A plurality of tubular supports 310 extend above the upper rectangular frame 304 to support overhead equipment. A skin 314 surrounds a mechanical compartment 318 and includes a bottom skin or floor 320 which has a top surface 322 and a downwardly bent surrounding lip 324. The top surface slopes slightly from its edges to a center region which includes a center drain. The bottom skin 320 prevents contamination of the components within the housing 34 caused by spraying or splashing against the floor during operation, or during spray cleaning of the machine. The machine 300 provides a gap 326 between a bottom 328 of the lower rectangular frame 306, which surrounds a perimeter of the mechanical compartment 318, and the top surface 322. The gap 326 is preferably about one inch and allows for better drainage and cleaning of the bottom skin 320 due to noninterference with the lower frame 306. The gap 326 is accessible upon opening of a cabinet doors and panels and allows a more effective viewing of the top surface 322 of the skin 320.

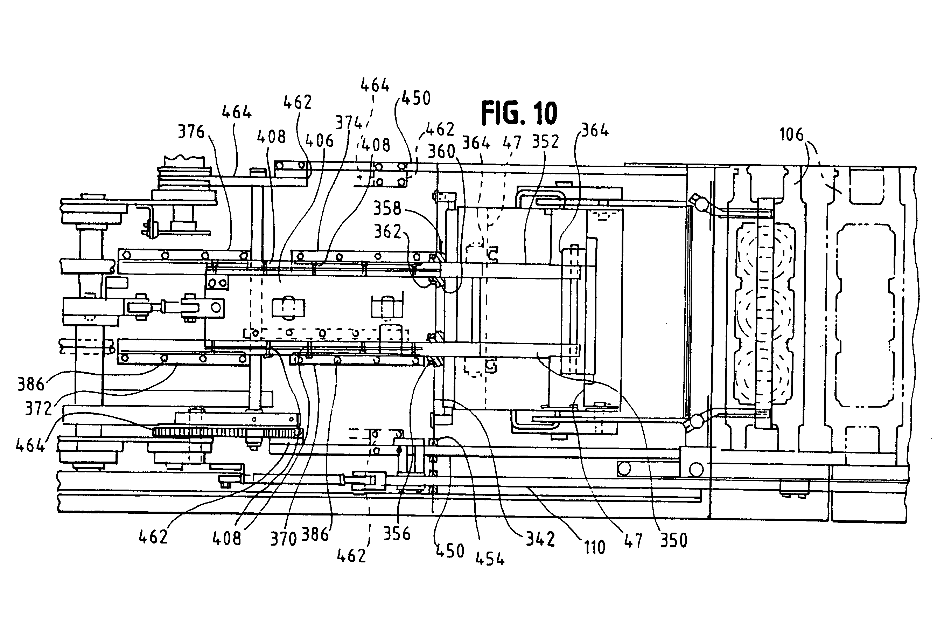

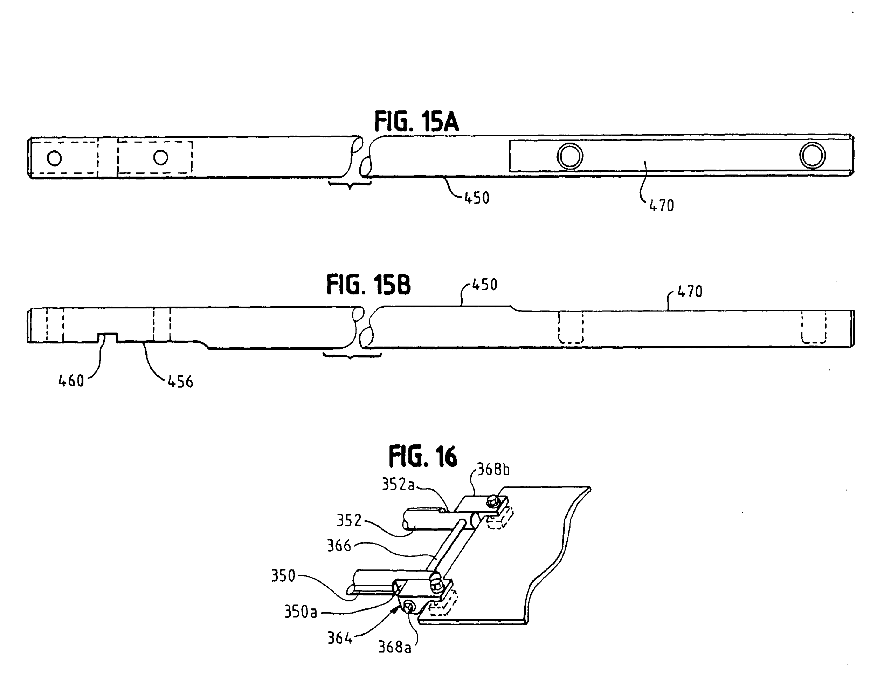

The mechanical compartment 318 is separated from a patty molding area by a front barrier wall 342 and a top barrier wall 344. A recovery pan 346 connected to the front barrier wall 342 overlies the top barrier wall 344. The mold plate 47 is driven into reciprocation by two parallel mold plate drive rods 350, 352 (see FIG. 9A). The drive rods 350, 352 each pierce through the barrier wall 342 through a seal assembly 356, 358 respectively (see FIG. 10). The seals 356, 358 provide a sealing and wiping action and are preferably rod wiper type seals for round rods. These seals are two-component seals having a seal body 360 and a back side lock nut 362. At a front end of the rods 350, 352 are flat regions to which is connected a hinge assembly 364 as shown in FIGURE 16. The hinge assembly 364 functions substantially the same as the hinge assembly 120 described in FIGURE 7 except that the rods 350, 352 are connected to the hinge assembly 364 via the hinge axle 366 and end retaining machine screws 368a, 368b.

The rods 350, 352 as well as the hinge assembly 364 and the plate 47 are shown in two positions in FIGURE 10: a forward-most position (shown solid) and a rear retracted position (shown in phantom).

The rods 350, 352 extend rearwardly within the mechanical compartment 318 to a fully retracted position shown in phantom in FIGURE 9. The parallel rods, 350, 352 are guided in linear rod bearings 370, 372, 374, 376 which are each fixed to a top structure plate 380 which is supported and fixed by the columns 310. The bearings 370, 372, 374, 376 are each formed of upper and lower halves which are bolted together by way of machine screws 386.

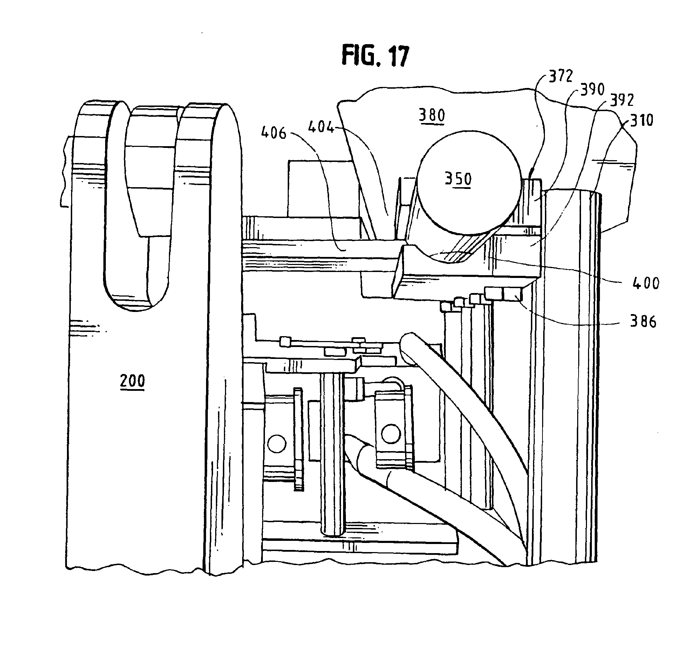

The bearing 372 is shown in FIGURE 17. The bearing 370 is identically fashioned. The bearings 374, 376 are configured in mirror image fashion. The bearing 372 includes a top bearing 390 which is fixed to a bottom bearing 392 by the fasteners 386 which can also be used, given sufficient length, to fasten the bearing assembly 372 to threaded holes in the overhead structure 380. The upper and lower bearing halves 390, 392 each include C-shaped bearing surfaces 400 which are treated with a Teflon or other friction reducing bearing material, or alternatively have rollers or other friction reducing members therein. The bearing halves 390, 392 provide an inside longitudinal gap 404 for allowing the lengthwise movement of a slide plate 406 through the bearing 372. The slide plate 406 is fastened to the rod 350 along one lateral side thereof, and fastened to the rod 352 along an opposite lateral side thereof by a plurality of spaced apart fasteners 408.

The long rocker arm 200 is connected to the slide plate 406 in identical fashion to the connection between the long rocker arm 200 and the slide plate 124 as shown in FIGURE 7, that is, using the clevis, female rod end, male rod end and associated bolts. The long rocker arm 200 is connected to a slide plate driving system, including the cam plate 270, substantially as shown in FIGURE 7. Reciprocal pivoting of the long rocker arm 200 causes the longitudinal reciprocation of the slide plate 406 and the two rods 350, 352 through the bearings 370, 372, 374, 376.

A further improvement of the present invention involves the structure of a vacuum arm shuttle rod 450. This rod 450, unlike the vacuum bar shuttle arms 108, 108a shown in FIGURES 8A and 8B, has a round cross section. This facilitates the use of an annular seal 454 at the barrier wall 342, such as a rod wiper type seal. Similar to the seals 356,358, the seal 454 is a two piece annular seal.

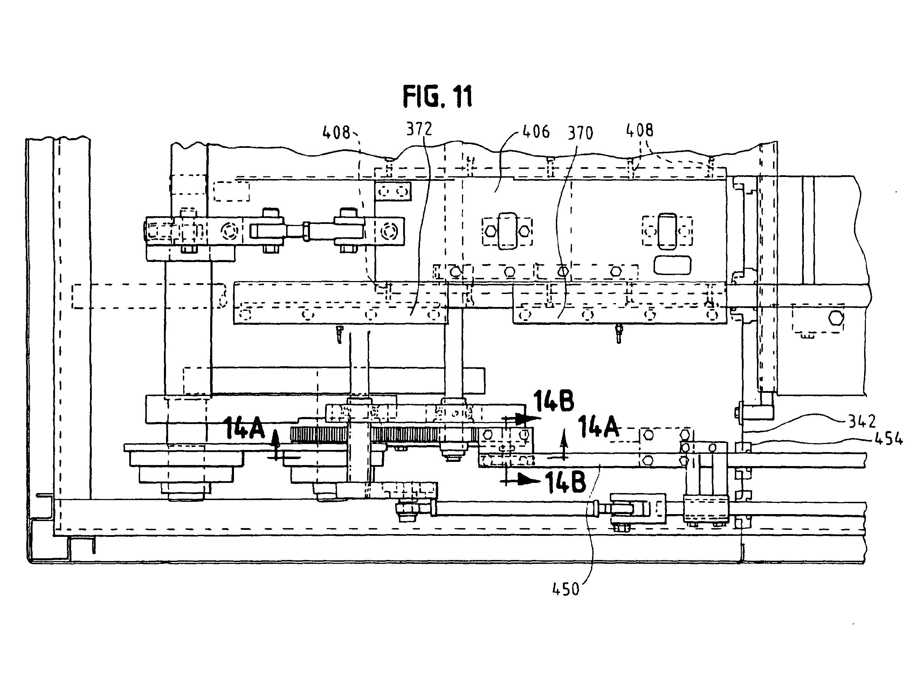

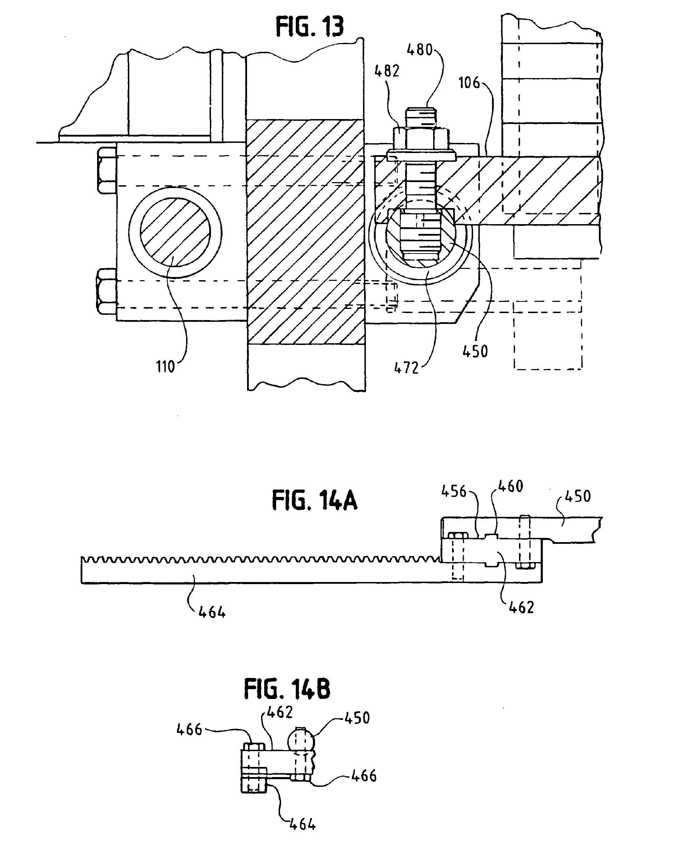

FIGURES 11, 14A and 14B illustrate the rod 450 having a flat section 456 having a keyway 460 for receiving an intermediate plate 462 which connects to a rack 464. The rod 450, the intermediate plate 462 and the rack 464 are fastened by machine screws or bolts 466. The rack 464 is reciprocally driven by a pinion such as the pinion 154 as previously described in FIGURE 8A, with regard to driving the rack 152.

As shown in FIGURE 10, two rods 450, two racks 464 and two plates 462 are arranged in two assemblies which are assembled in mirror image fashion on opposite sides of the machine and connected to the bar 106 to operate in tandem as described above with regard to the prior art rods 108, 108a.

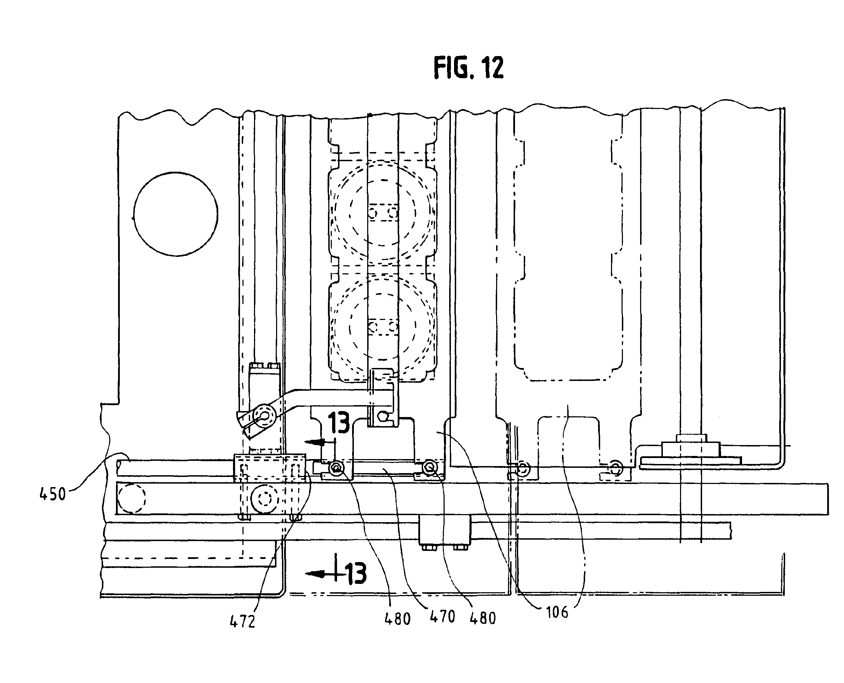

FIGURE 15A and 15B show the rod 450 in isolation including the flat end 456 and keyway 460. FIGURE 12 shows the vacuum bar 106 connected to an opposite end of the rod 450, particularly on a top flat surface 470 thereof. The flat surface is also shown in FIGURE 15A and 15B. Two positions of the vacuum bar 106 are shown (one shown solid and one shown in phantom) corresponding to the reciprocation of the rod 450. The rod 450 also passes through a bearing support 472 between the intermediate plate 462 and the vacuum bar 106.

FIGURE 13 shows in section the vacuum shuttle bar 450 connected to the vacuum bar 106 using a threaded stud 480 threaded into the vacuum bar 450, and having an overlying nut 482 drawn tight on the stud, onto the vacuum bar 106.

The present invention also includes an improvement to the knock-out configuration of FIGURE 6. The present invention also includes two cams, two knock-out arms, two knock-out rods, two knock-out bar arms, and two oiling systems in substantially the same general layout a shown in FIGURE 6. The invention provides an improved tie bar connection detail, an improved knock-out rod and an improved knock-out rod support, and an improved oil reservoir, all as compared to that illustrated in FIGURE 6.

FIGURE 9 illustrates the knock-out arm 79 interacting with the cam 72 to be generally identical to that shown in FIGURE 6. The cam is driven by the drive chain 75 which is driven by an output shaft from the drive reducer 180. The knock-out arm 79 is connected via the linkage 92 to a knock-out rod 400 of the present invention.

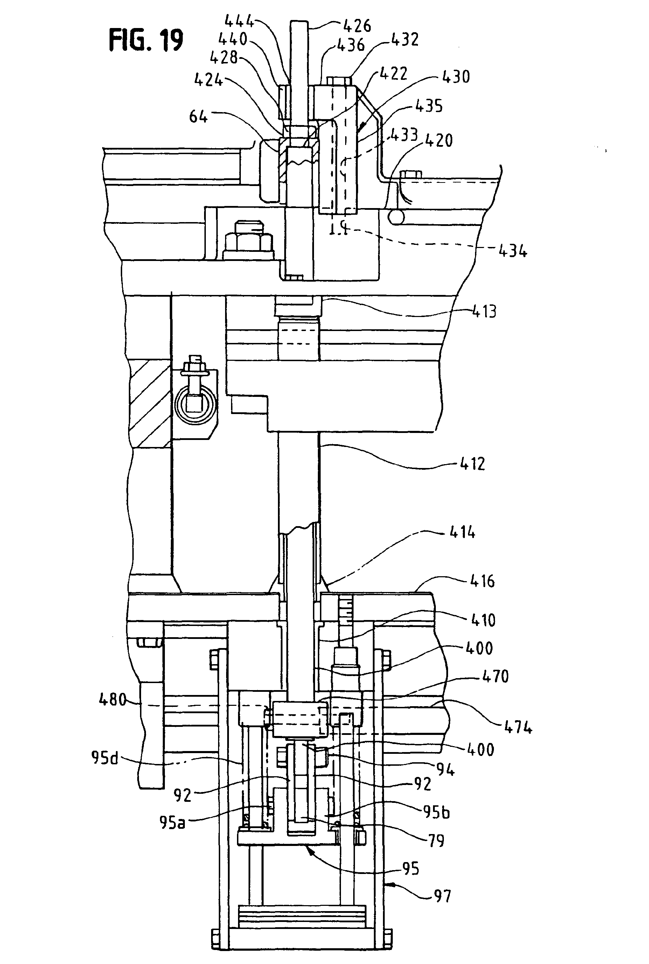

FIGURES 9A and 19 show the knock-out arm 79 which is connected by the fastener 95a to the linkage 92. The linkage 92 is in the form of dual linkage plates on opposite sides of the knock-out arm 79. The linkage 92 and knock-out arm 79 are fit between the vertical legs 95b and the fastener 95a connects the two vertical legs 95b, the two linkage plates 92 and the knock-out arm 79. The linkage plates 92 are further connected at an opposite end to the knock-out rod 400 using the fastener 94.

The rod 400 reciprocates within a stationary tubular guide or bushing 410. The rod is surrounded by a protective tube 412. The protective tube 412 also includes a beveled shoulder piece 414 adjacent an exposed surface 416 which prevents accumulation of debris or waste product into sharp corners or joints during spray cleaning of the apparatus. The beveled shoulder piece acts to deflect matter and water outwardly. An upper bushing or guide 413 guides an upper portion of the reciprocating rod 400.

The rod 400 extends upwardly to above a mold plate cover top surface 420. The knock-out bar arms 64, which are substantially identical to those shown in FIGURES 6, are fit over the rod 400 and held down onto a shoulder 422 of the rod 400 by a nut 424. Unlike the rod shown in FIGURE 6, the rod of the present invention includes an extension 426 above a threaded region 428.

An inverted L-shaped support bracket 430 is fastened to the mold cover support surface 420 by a fastener 432 fit through a bore 433 of a vertical leg 435 of the bracket. The fastener 432 is screwed into a threaded hole 434 of the mold cover. An overhanging portion 436 of the bracket 430 includes an aperture 440 holding a sleeve bearing 444 which receives the extension 426 of the rod 400. Thus, the rod extension 426 can slide vertically within the sleeve bearing 444.

A second support bracket 430a is provided at the respective opposite knock-out rod 400 fashioned in mirror image fashion, with the overhang portion 436a angled outwardly of the center line of the machine. It should also be noted that FIGURE 9A shows the left knock-out rod 400 in a raised position and the right knock-out rod 400 in a lowered position. This would not be a preferred operating condition but is only shown to illustrate the varied movement of the extensions 426 of the two knock-out rods 400. In fact, the knock-out rods 400 move up and down together, evenly.

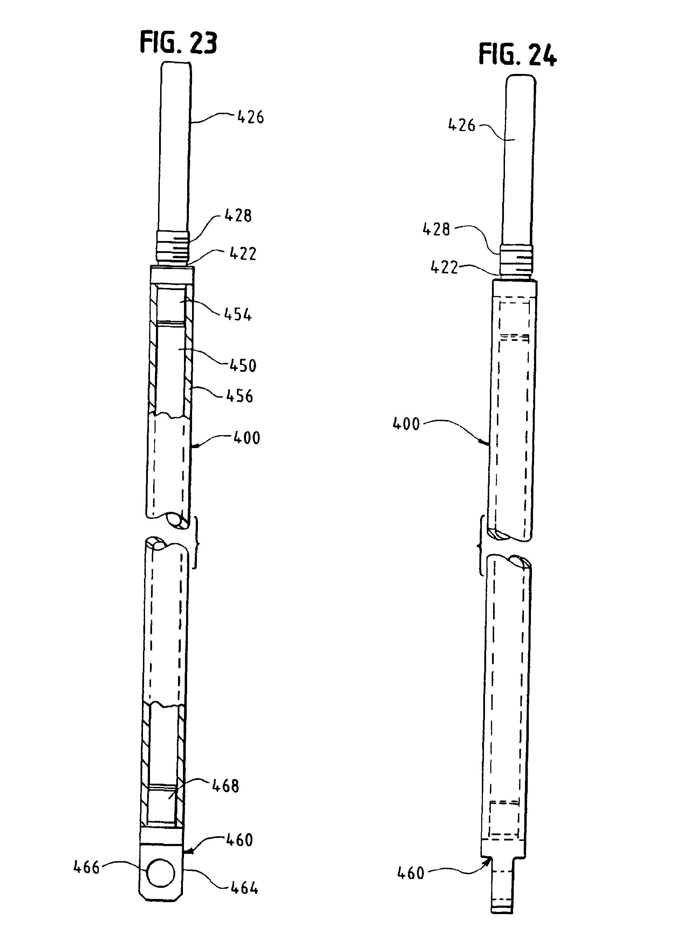

FIGURES 23 and 24 illustrate the structure of the knock-out rods according to the invention. The knock-out rods are in fact tubular having a hollow interior 450. The extension 426, the threaded region 428, the shoulder 422 and a plug portion 454, as a unitary structure, are inserted into an end of the knock-out rod tube 456, and welded thereto. At the bottom end of the knock-out rod a second unitary structure 460 includes a lug 464 with an aperture 466, the lug 464 extending in unitary fashion with a second plug 468 which is welded into an end of the tube 456.

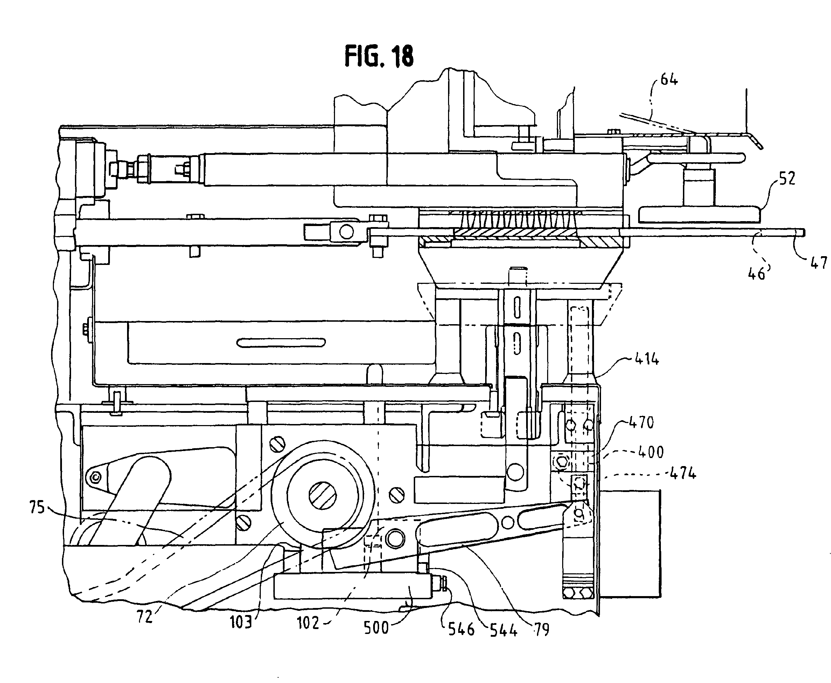

FIGURE 18 shows a clamp block or yoke 470 which clamps around the knock-out rod 400 and provides a connection for a spacer rod or a tie rod 474 which connects the two knock-out rods 400.

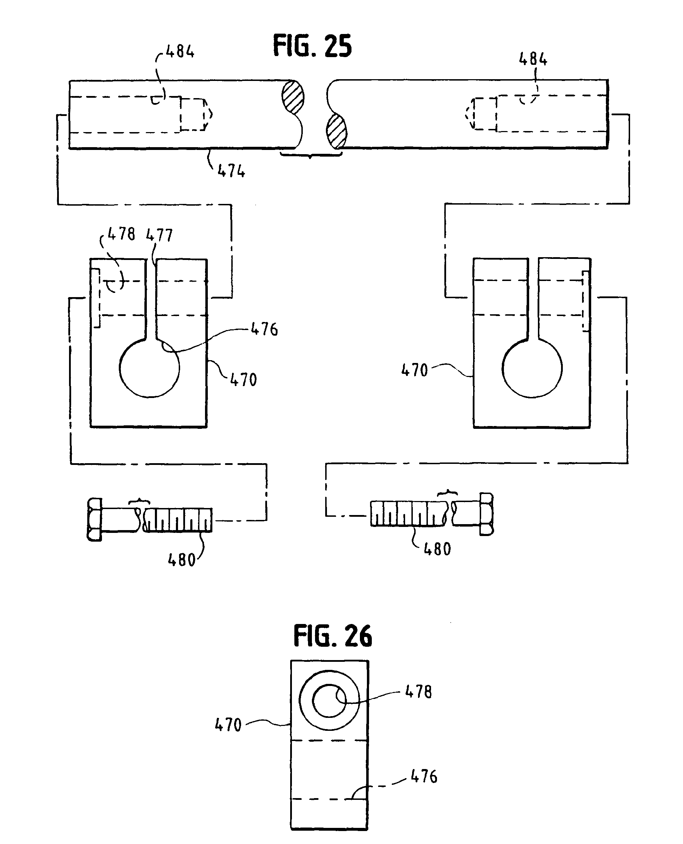

FIGURE 25 shows this arrangement in more detail. The yoke 470 includes a central, generally circular aperture 476 for receiving the knock-out rod 400. The aperture 476 is open into a slot 477. A transverse bore 478 extends through a width of the yoke 470 including the slot 477. The bore is counter sunk for receiving a machine screw or bolt 480. The opposite side yoke 470 is arranged in a mirror image orientation. Between the yokes 470 is arranged a tie rod 474 which is substantially solid with threaded bores 484 at opposite ends for receiving the fasteners 480 to lock the yokes 470 to opposite ends of the tie rod 474. By tightening the fasteners 480 the yokes are clamped to the tie rod 400 due to the presence of the slot 477 which allows the aperture 476 to be drawn tight against the knock-out rods 400. Thus, the flag or tab 96 shown in FIGURE 6 is eliminated and a more sturdy construction for the tie rod is provided, avoiding the potential fabrication problem of the flag 96 and the operational problem of the cracking of the flag 96 from the knock-out rod 70.

FIGURE 18 illustrates a further improvement of the present invention over the prior art machine. Particularly, referring to FIGURE 6, the oil pans 101 which include an open top 104 are prone to be contaminated or washed out by the entry of wash water during a cleaning operation into the oil 105. According to the present invention, substantially sealed oil containing reservoirs 500 are provided in substantially the same positions that the open top oil pans 101 are located in FIGURE 6, relative to the cams 72 and the knock-out arms 79.

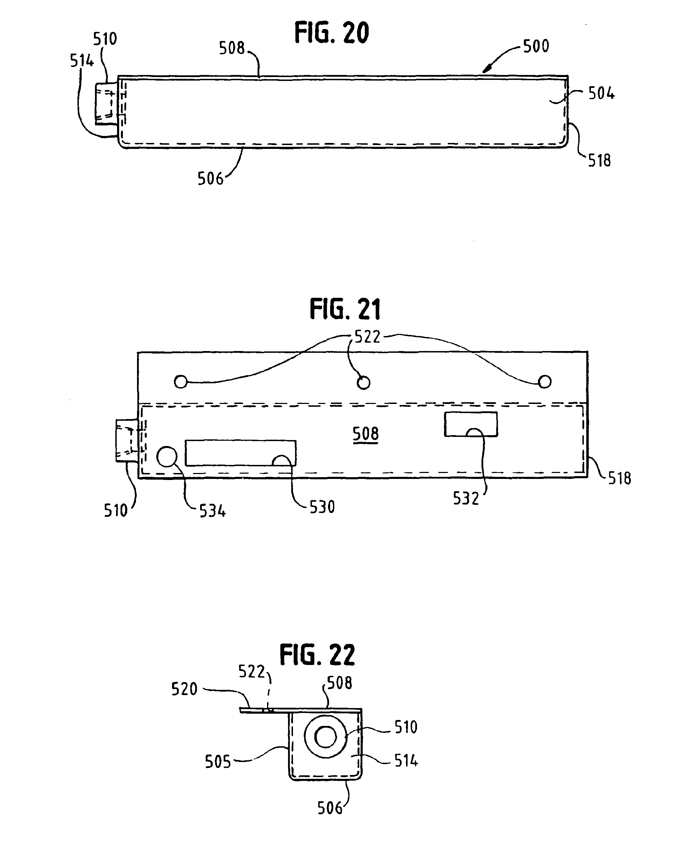

One of the reservoirs 500 is shown in detail in FIGURES 20 through 22. It should be noted that the reservoir for the right side of the machine is shown but that the reservoir for the left side would merely be a mirror image structure to that for the right side. FIGURE 20 shows the reservoir including side walls 504, 505 a bottom wall 506, a top wall 508 and a side oil nozzle 510, which is typically a one quarter inch NPT half coupling, welded into an opening in an end wall 514 which faces toward the front of the machine for easy access and viewing of oil level. The opposite end wall is labeled 518 in the figure.

As shown in FIGURE 22, the top wall 508 extends outwardly of the side wall 505 into a flange portion 520 having a plurality of screw receiving holes 522 for attaching the reservoir 500 to stationary structure of the machine.

As shown in FIGURE 21 the top wall 508 includes a large rectangular opening 530 for the insertion of the wick 102 and a smaller rectangular opening 532 for the insertion of the wick 103. The function of the two wicks 102, 103 is explained with regard to FIGURE 6. A further hole 534 is arranged adjacent to the nozzle 510 and functions as a fill port. In this regard an oil hole cover 544 can be pushed or threaded into the opening 534 for filling the reservoir 500 with oil. An oil hole cover is a short cylindrical tube with a spring loaded closed lid. A threaded viewing gauge 546 is used to plug the side oil nozzle 510. The nozzle 510 being open on a side of the reservoir can be used to check proper level within the reservoir.

## Claims

1. A patty forming machine, comprising a compartment (318) with a front wall (342) and enclosing a reciprocating device; a mould plate (47) arranged to reciprocate outside the compartment by force from the reciprocating device, and having at least one cavity (46) for receiving food product to form a patty; and two drive rods (35),(352) of round cross-section arranged in parallel and operatively connected to the mould plate,
**CHARACTERIZED IN THAT**
a slide plate (406) is located within the compartment, which slide plate is operatively connected between the reciprocating device and the drive rods, and remains within the compartment throughout the reciprocating travel of the slide plate; and wherein two seals (356,358) are mounted in the front wall (318), surrounding two respective openings, each drive rod (350,352) penetrating one of the seals.

2. A machine according to Claim 1 wherein the reciprocating device includes a single pivotal rocker arm (200) having a distal end, and an electric motor operatively connected to oscillate the rocker arm, with its end oscillating in a longitudinal plane; and wherein the pivotal rocker arm distal end is connected to the slide plate (406).

3. A machine according to Claim 2, including a further seal (454) mounted to the front wall (342) and surrounding a further opening; and a vacuum bar assembly having a reciprocating rod (450) of round cross-section extending through the seal (454), and a vacuum bar for interleaving flexible paper sheets with formed patties, the vacuum bar being driven by the reciprocating rod (450), the reciprocating rod being operatively connected to the reciprocating device, and passing through the front wall.

4. A machine according to Claim 3 wherein the vacuum bar assembly includes a rack (464), and an intermediate plate (462), the reciprocating rod being fastened to the intermediate plate, and the intermediate plate being fastened to the rack, the rack and intermediate plate being located within the compartment (318).

5. A machine according to Claim 3 or Claim 4 wherein the reciprocating rod (450) includes a flat surface adjacent said round cross-section adapted for fastening the reciprocating rod to the reciprocating device.

6. A machine according to any preceding Claim wherein the compartment (318) is carried on a frame structure (302) having a bottom horizontal frame (306) supporting the reciprocating device, and a bottom skin (320) underlying the frame structure; the bottom skin being spaced a distance below the bottom horizontal frame to form a vertical gap to allow spray cleaning of a top surface of the bottom skin.

7. A machine according to Claim 6 wherein the gap has a height of substantially 2.54 cms (1 inch).

## Patentansprüche

1. Maschine zur Herstellung von Nahrungsmitteformlingen, umfassend: eine Kammer (318), die eine Vorderwand (342) aufweist und eine sich hin und her bewegende Vorrichtung umschließt, eine Formplatte (47), die angeordnet ist, um sich durch Eine Kraft von der sich hin und her bewegenden Vorrichtung außerhalb der Kammer hin und her zu bewegen, und die mindestens einen Hohlraum (46) für die Aufnahme des Nahmngsmittelproduktcs aufweist, um einen Nahrungsmittelformling herzustellen; und zwei Antriebsstangen (350, 352) mit rundem Querschnitt, die parallel angeordnet und mit der Formplatte funktionell verbunden sind,
**dadurch gekennzeichnet, dass**
eine Schieberplatte (406) innerhalb der Kammer angeordnet ist, wobei die Schieberplatte funktionell zwischen die sich hin und her bewegende Vorrichtung und die Antriebsstangen geschaltet ist und über die gesamte Pendelbewegung der Schieberplatte hinweg innerhalb der Kammer bleibt; und wobei zwei Dichtungen (356, 358) in die Vorderwand (318) montiert sind, die zwei jeweilige Durchbreche umgeben, und jede Antriebsstange (350, 352) eine der Dichtungen durchdringt.

2. Maschine nach Anspruch 1, bei der die sich hin und her bewegende Vorrichtung einen einzigen schwenkbaren Kipphebel (200) umfässt, der ein distales Ende aufweist, und ein Elektromotor funktionell verbunden, um den Kipphebel zu oszillieren, dessen Ende in einer Längsebene oszilliert; und bei der das distale Ende des schwenkbaren Kipphebels mit der Schieberplatte (406) verbunden ist.

3. Maschine nach Anspruch 2, die eine weitere Dichtung (454) umfasst, die an die Vorderwand (342) montiert ist und einen weiteren Durchbruch umgibt; sowie eine Vakuumbalken-Baueinheit, die eine sich hin und her bewegende Stange (450) mit rundem Querschnitt, die sich durch die Dichtung (454) hindurch erstreckt, und einen Vakuumbalken aufweist, der dazu dient, zwischen die ausgeformten Nahrungsmittelformlinge flexible Papierbögen zu legen, wobei der Vakuumbalken von der sich hin und her bewegenden Stange (450) angetrieben wird, und wobei die sich hin und her bewegende Stande funktionell mit der sich hin und her bewegenden Vorrichtung verbunden ist und durch die Vorderwand hindurchgeht.

4. Maschine nach Anspruch 3, bei der die Vakuumbalken-Baueinheit eine Zahnstange (464) und eine Zwischenplatte (462) umfasst, wobei die sich hin und her bewegende Stange an der Zwischenplatte befestigt ist, die Zwischenplatte an der Zahnstange befestigt ist und die Zahnstange und die Zwischenplatte innerhalb der Kammer (318) angeordnet sind.

5. Maschine nach Anspruch 3 oder Anspruch 4, bei der die sich hin und her bewegende Stange (450) eine ebene Fläche umfasst, die an den runden Querschnitt angrenzt und dafür ausgelegt ist, die sich hin und her bewegende Stange an der sich hin und her bewegenden Vorrichtung zu befestigen.

6. Maschine nach einem der vorhergehenden Ansprüche, bei der die Kammer (318) auf einer Rahmenkonstruktion (302) getragen wird, die einen horizontalen Bodenrahmen (306) aufweist, der die sich hin und her bewegende Vorrichtung abstützt, und wobei eine Bodenhaut (320) unter der Rahmenkonstruktion liegt; wobei die Bodenhaut mit einem Abstand unterhalb des horizontalen Bodenrahmens angeordnet ist, um einen vertikalen Zwischenraum zu bilden, damit die Sprühreinigung einer oberen Fläche der Bodenhaut ermöglicht wird.

7. Maschine nach Anspruch 6, bei der der Zwischenraum eine Höhe von im Wesentlichen 2,54 cm (1 inch) aufweist.

## Revendications

1. Machine à mouler des galettes, comprenant un compartiment (318) avec une paroi avant (342) et renfermant un dispositif déplacement alternatif ; une plaque de moulage (47) agencée de sorte à effectuer un déplacement alternatif à l'extérieur du compartiment par l'intemédiaire de la force transmise par le dispositif à déplacement alternatif, et comportant au moins une cavité (46) pour recevoir un produit alimentaire pour former une galette ; et deux tiges d'entraînement (350, 352), ayant une section transversale circulaire, agencées de manière parallèle et connectées en service à la plaque de moulage,
**caractérisée en ce que**
une plaque coulissante (406) est agencée dans le compartiment, ladite plaque coulissante étant connectée en service entre le dispositif à déplacement alternatif et les tiges d'entraînement, et restant dans le compartiment au cours du déplacement alternatif de la plaque coulissante; deux joints (356, 358) étant montés dans la paroi avant (318), entourant deux ouvertures respectives, chaque tige d'entraînement (350, 352) pénétrant dans l'un des joints.

2. Machine selon la revendication 1, dans laquelle le dispositif à déplacement alternatif englobe un seul bras culbuteur pivotant (200), comportant une extrémité distale, et un moteur électrique, connecté en service de sorte à faire osciller le bras culbuteur, son extrémité oscillant dans un plan longitudinal; l'extrémité distale du bras culbuteur pivotant étant connectée à la plaque coulissante (406).

3. Machine selon la revendication 2, englobant un joint additionnel (454) monté sur la paroi avant (342) et entourant une ouverture additionnelle ; et un assemblage de barre à vide comportant une tige à déplacement alternatif (450) ayant une section transversale circulaire, s'étendant à travers le joint (454), et une barre à vide pour entrelacer des feuilles de papier flexibles avec des galettes moulées, la barre à vide étant entraînée par la tige à déplacement alternatif (450), la tige à déplacement alternatif étant connectée en service au dispositif à déplacement alternatif et traversant la paroi avant.

4. Machine selon la revendication 3, dans laquelle l'assemblage de barre à vide englobe une crémaillère (464) et une plaque intermédiaire (462), la tige à déplacement alternatif étant fixée sur la plaque intermédiaire et la plaque intermédiaire étant fixée sur la crémaillère, la crémaillère et la plaque intermédiaire étant agencées dans le compartiment (318).

5. Machine selon les revendications 3 ou 4, dans laquelle la tige à déplacement alternatif (450) englobe une surface plate adjacente à ladite section transversale circulaire, adaptée pour fixer la tige à déplacement alternatif sur le dispositif déplacement alternatif.

6. Machine selon l'une quelconque des revendications précédentes, dans laquelle le compartiment (318) est supporté sur une structure de cadre (302), comportant un cadre horizontal inférieur (306) supportant le dispositif à déplacement alternatif, et une pellicule inférieure (320) agencée au-dessous de la structure de cadre ; la pellicule inférieure étant espacée d'une certaine distance au-dessous du cadre horizontal inférieur pour former un espace vertical afin de permettre un nettoyage par pulvérisation d'une surface supérieure de la pellicule inférieure.

7. Machine selon la revendication 6, dans laquelle l'espace a une hauteur correspondant pratiquement à 2,54 cm (1 pouce).
